# EUROPEAN PATENT APPLICATION

(11) **EP 1 734 315 A1**
(43) Date of publication of application: **20.12.2006**
(21) Application number: 06011589.6
(22) Date of filing: 05.06.2006
(51) Int. Cl.: F24H 1/43

(54) **Gas oil boiler with flat spirals**

(30) Priority: 07.06.2005 IT LU20050015
(71) Applicant: Biagioni, Pietro, 55052 Fornaci di Barga Lucca (LU) (IT)
(72) Inventor: Biagioni, Pietro, 55052 Fornaci di Barga Lucca (LU) (IT)
(74) Representative: Bertani, Barbara

(57) **Abstract**

Gas oil - boiler with flat spirals constituted, in particular, by a special type of burner's plate and by flat spirals where gas oil can easily flow.

The above mentioned boiler allows to recover the heat loss from the drain pipe of the boilers' burner and it prevents the development of both the condensed steam and/or the rust; it allows a substantial temperature rise in the heating system, without compromising its parts nor the general safety limit.

The boiler output is thus higher and , on the contrary, the consumption will be lower with a significant money saving.

## Description

*Technical field*: the object of this application concerns a technical field regarding domestic and industrial heating systems, in the case in point, boilers.

*Background art*: the existing products arc mainly heating water boilers.

It is common knowledge that water has the following imperfections: 1) water produces condensate; 2) water produces oxidation consequently rust; 3) it has a rather small temperature variation (at 0°C water freezes solid, at 100°C it boils).

The existing problems are approximately located as follows:
1) heat loss.
   The existing types of boilers have a huge heat loss from their drain pipe; in consequence, the intention of the inventor is to regain this heat loss in order to easily optimize the boiler's efficiency;
2) production of condensate which hinders and/or lessens the heating.
   As far as point 1) is concerned, in the existing boilers while you try to recover the heat loss, a great amount of condensate develops inside the boiler's burner and this of course hinders the heating system. The only way to overcome this obstacle is to prevent the development of the condensate. According to this evaluation, the obvious remark is that water is evidently not the most suitable liquid to be used in boilers. An alternative to the use of water is a lubricating oil, commonly used in cars' engines.
   This particular oil has, in fact, a very high boiling point, so that it can be used at very high temperature. At the same time it has a freezing point which is really lower if compared to the water's one. Finally, it maintains for a long time all its distinctive traits and this allows the working of the engine.
3) slowness of the circulation of the heating system.
   As far as point 2) is concerned, on up-today existing boilers, trying to prevent the development of the condensate through the use of a lubricating oil instead of water, you create a new problem, that is to say the slowness of the circulation of the heating system because this oil is far too thick. To overcome this imperfection, it is necessary to use a much more suitable heating element to be used in boilers.
   For this reason, for the working of the object of this application, the inventor suggests the use of another liquid, a derivative of lubricating oil, which is much more fit to be used in heating systems: GAS OIL.
   Of course, the above mentioned element has others peculiarities that will be explained in the following description.
   Thanks to the peculiarities of this new element, the inventor means to solve the above mentioned problems, as clearly described and represented in the following pages, even though by way of example.

### Disclosure of the invention:

The solution to the above mentioned problems is, according to the inventor, a gas oil boiler with flat spirals.

The most important advantages of the invention are: a) the possibility to get back the heat which is usually lost through the drain pipe of boilers; b) non-development of the condensate and of lime-stone; c) rise of the average temperature in the heating system, without of course compromising its parts nor its security limits; d) higher boiler output; e) reduced consumption; f) economical saving.

All this was possible also thanks to the distinctive traits of the elements we chose to use.

In particular, the characteristics of gas-oil are the following ones: 1) it does not develop rust; 2) it never reaches the boiling point, 3) it freezes solid at very low temperature (about -15 °C), 4) it does not develop condensate; 5) it is much more lubricating; 6) it docs not develop lime-stone and it does not scale; 7) it has a wide range of temperatures to be used; 8) it is the best conductor among liquids and at the same time it has the highest wetting power.

Instead of gas-oil, others derivative of petroleum can be used, on condition that they are suitable for the aim of this patent application.

In details, the characteristics of copper, the material of which the pipes are constituted, are the following ones : 1) copper is a remarkable heat conductor; 2) it does not get rusty ; 3) it is resistant to high strengths and expansions (bar 30); 4) it is resistant to high temperature (melting point 1083°C).

The pipes are flat and not round and this it is to dwindle the space between the spirals, all this allows us to have a boiler with optimal dimensions with a burner that works in a perfect way.

The welds between the pipes are made with a suitable alloy called copper-copper, which melts only at 800°C.

In details, the characteristics of air are the following ones: 1) it contains oxygen; 2) it is a remarkable heat-conductor; 3) it is variable at high or low temperature; 4) you can press and release it, etc.

### Brief description of the drawings:

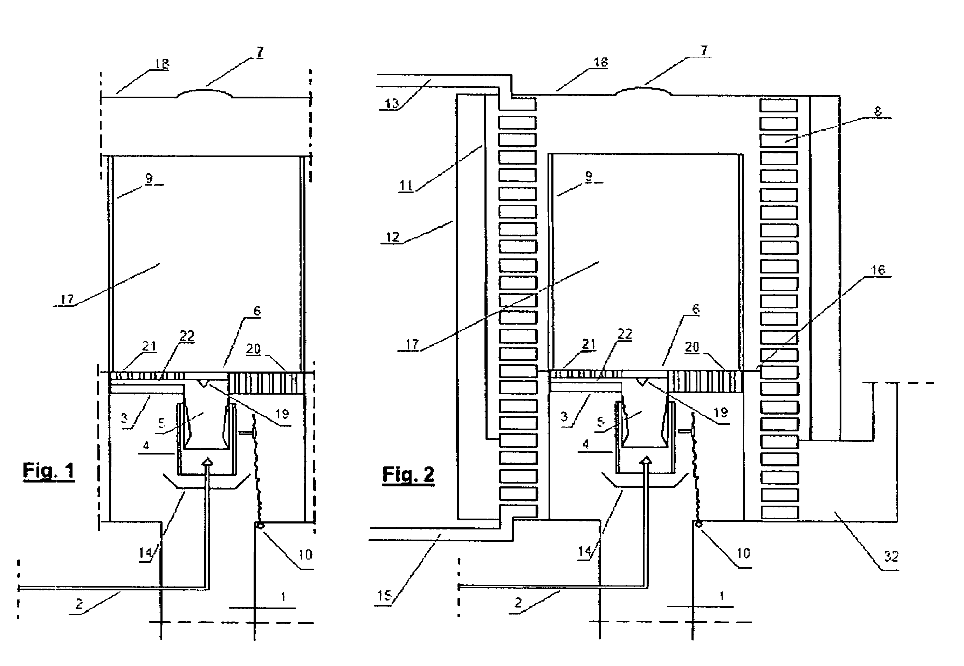

The patterns which are here enclosed represent respectively : Figure 1 is the front view of the invention and it shows the route of air inside the burner;

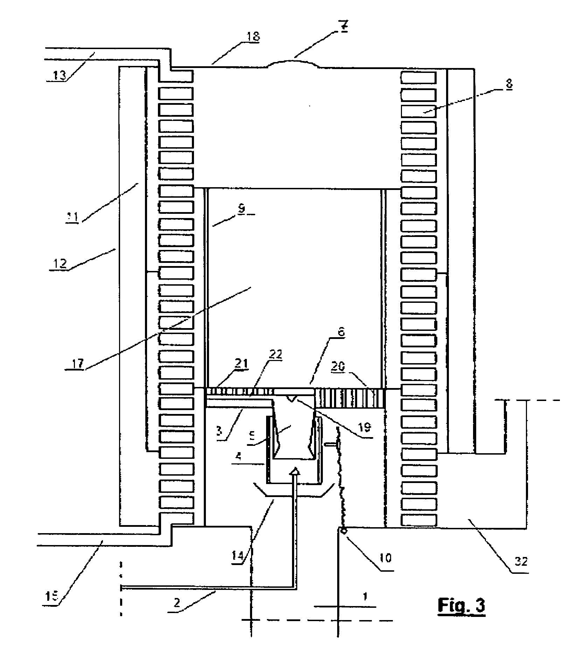

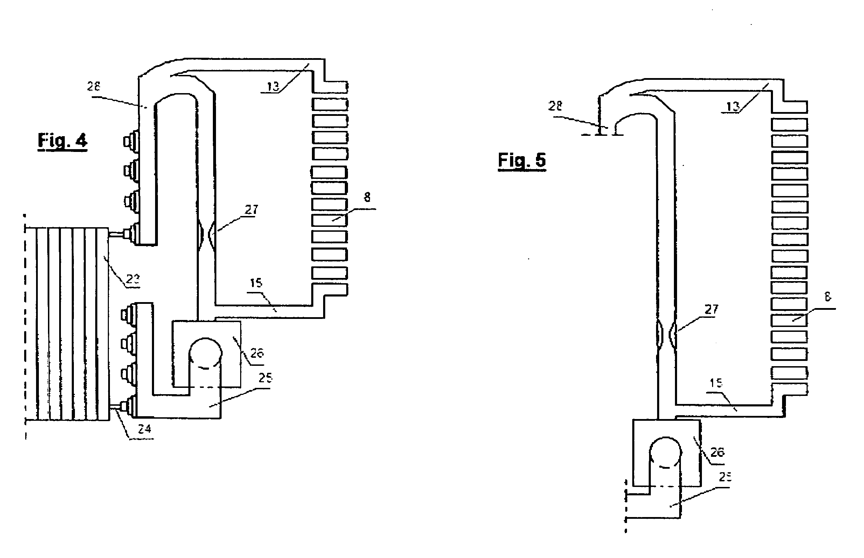

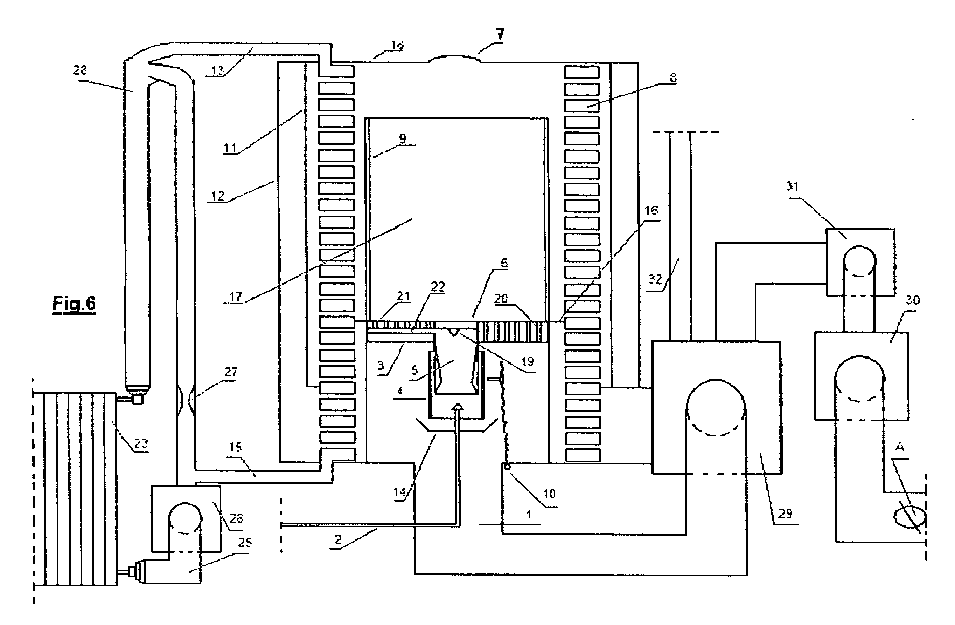

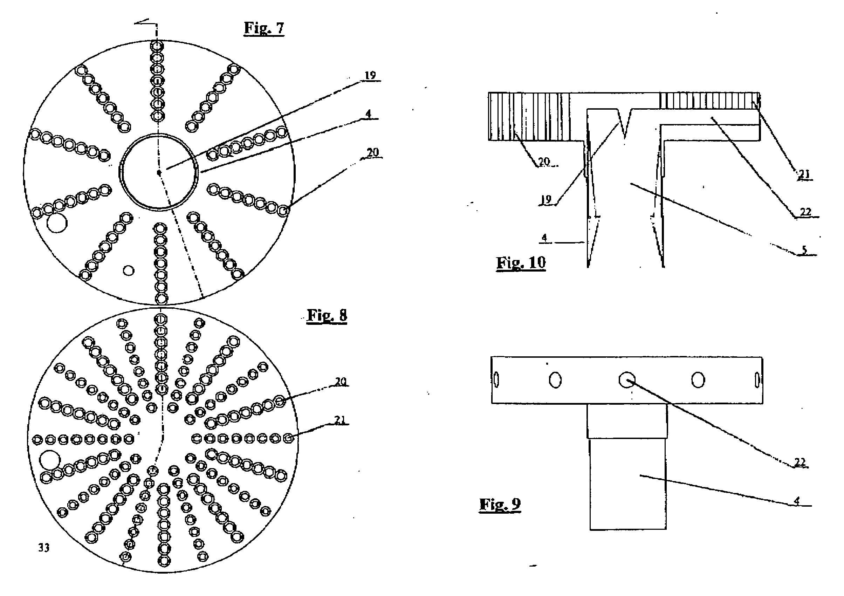

Fig.2 is the frontal view of the invention which shows the smaller type of boiler, the one used for domestic heating (with three air flows); Fig 3 shows the industrial type of boiler (with five air flows), Fig.4 shows the simplified functioning of the small type of boiler, remarking the route of gas-oil in an already hot heating system; Fig. 5 shows the simplified functioning of the big type of boiler in its maintenance stage on industrial level; Fig.6 shows in its entirety, as a whole, the invention with its components and/or items; Fig.7 is the view from below of the burner's plate; Fig.8 is the view on high of the burner's plate; Fig.9 shows the overview, the prospectus of the burner; Fig. 10 shows a part of the burner itself.

Fig.1, as already said, shows the route of air inside the burner and it remarks the peculiarities of the burner's plate.

Air enters the heating system forcedly, i.e. thanks to a ventilator (31 Fig.6), from the entrance (1), it reaches the deflection plate (14) where it is then pushed towards the burner's plate (3). A certain amount of pressure is thus generated and a part of the air goes right through the burner's plate, thanks to a series of small holes, i.e. (20). The plate's thickness is suitable to the use and it depends of course on the type of boiler, too. A part of this air gets back and bumps on the top side of the deflection plate (14) and goes towards the register pipe (4) which controls the air flow; inside this pipe, thanks to its shape, a depression occurs; this depression sucks back the gas that springs from the (2) gas entrance pipe. In the middle (5) of the register pipe (4) so we have a concoction, a mixture of air and gas, this mixture flows towards the upper part and is thus separated in different passages, i.e. (22) in the plate (3), thanks to a small inverted cone (19). This cone has dimensions which are proportionally suitable both to the holes where the air flows, i.e. (20), and to the holes where air and gas flow, i.e. (21). At this point the mixture of air and gas goes out from the topside (6) of the plate (3) thanks to the above mentioned holes, i.e. (21). In the upper part (6) of the plate (3) the mixture of air-gas is then burned out through an electric ignition (33), that creates, in the combustion area (17), a set of little flames.

The burner's plate (3) is made of steel, which is a great heat conductor; therefore, on one side it heats up air and gas that pass through it, and on the other side it is chilled by air and gas themselves, having as a consequence, a high fixed-temperature, in the way to advantage, thus, a good burner's working. This plate (3) is cylinder-shaped; on it there are two series of holes: § holes, i.e. (20) having appropriate dimensions that cross the plate (3) from the lower part to the topside(6), but only air can pass through them. Air, obviously, brings with itself oxygen and this increases the combustion; § holes, i.e. (21) having appropriate dimension, normally smaller than the ones of the aforesaid holes from which passes the mixture air-gas; the mixture enters the plate (3) from a middle passage (5) in the register pipe (4) and passes through it radial way from the passages, i.e. (22), to go across the holes, i.e. (21).

Inside the combustion pipe (9), i.e. made of iron, takes place the concoction of air temperature. Air rises up and comes across the disc (18), that is made of refractory material and it is high heat-resisting, and consequently here air is separated : hot air goes towards the flat spiral (8 in Fig.2). Both the disc (18) and the combustion pipe (9) are made of a material suitable to easily incandescent when the burner is working. At this point we go on the stage of the heating of the liquid which circulates inside the flat spiral.

Fig.2, as already said, shows the smaller type of boiler, trying to underline the peculiarities of the flat spiral.

Between the flat spiral (8) and the combustion pipe (9), the air comes down towards the burner's plate (3) and it creates such a great pressure that slows down the speed of the air itself in the flat spiral; all this favors a temperature exchange reaction which is very effective. On the external part of the flat spiral we have the non-return heat pipe (11); this pipe is longer than the combustion one (9), therefore it compels the air to make another crossing of the spiral (8) and afterwards to come back passing, this time, through the most internal part of the spiral itself, but now it is below the level where the plate finds itself (3)

At this point, the air continues to get down and it is compelled to do another crossing of the spiral towards the external pipe of the boiler (12) and it then reaches the discharge pipe (32). Since air crosses many times the flat spiral it gives all its heat energy to the spiral itself and therefore to the liquid which passes inside it; so that the temperature rises while we go from the lowest part to the upper part of the spiral and the gas-oil that flows inside the spiral (8) enters from (15) at a low temperature and comes out from (13) with an increased temperature.

Fig.3, as already said, shows the industrial type of boiler remarking again the peculiarities of the flat spiral.

Air flows for the first time through the flat spiral (8) and goes towards the non-return heat pipe (11) then it goes downwards and it is compelled to do a second crossing of the spiral (8) towards the combustion pipe (9). At this point, two main things occur. a) as the air chilled a bit, it chills the combustion pipe (9), too, leaving it anyway, at a height fixed-temperature; b) air regains heat. The air, while going downwards, makes a third crossing of the spiral towards the external part of it and it thus touches the non-return heat-pipe (11); it crosses the spiral for the fourth time going towards the internal part of the spiral coming back so through the most internal part of the spiral itself, but now it is below the level of the burner's plate (3). Now the air keeps going downwards and it is compelled to make a fifth crossing of the spiral towards the external pipe of the boiler (12) in order to reach the drain-pipe (32). We detected that after the fifth crossing of the flat spiral, the air goes out from the drain-pipe at room temperature, if the radiators are cold; on the contrary, it goes out at 30°C when the radiators are in a maintenance period. All the crossing are also caused by the crowns, i.e. (16), which are firmly connected to the pipes, i.e. the combustion's ones (9).

Fig.4, as we have already said, shows the simplified functioning of the small type of boiler in a maintenance period and it underlines the easy and high increase of the temperature with a minimum consumption.

Gas-oil goes out from the radiator (23) at point (24) at about 60°C and enters the collector tube (25) with an adequate quantity of 30 liters to the minute; afterwards it enters the pressure pump (26) and goes up towards the adjustable valve (27) at 2,5 BAR pressure. The adjustable valve (27) controls the gas-oil flux, i.e., because you may have more radiators or you need a different temperature. This valve also (27) subdivides the liquid in two equal parts: 15 liters a minute enter from (15) into the flat spiral (8) till the end of it (13) with a temperature of 80°C and 1 BAR pressure, afterwards there is a fall of pressure of 1,5 BAR; the others 15 liters a minute, pass by the valve (27), they get straight at point (28) where the gas-oil flows into, after having gone out from the spiral (8); here the mixture between the two amounts of liquid takes place; the first amount has a temperature of 80°C or anyway higher than the second one which usually has a temperature of 60°C. The result is an homogeneous flux of a liquid, that is to say 30 liters a minute at a temperature of 70°C, or anyway an intermediate temperature if compared to the previous two.

During the maintenance period of the heating system, the burner works exclusively at the bare minimum increasing the temperature of only 20°C and the consumption is as much as the consumption of a medium stove that we have in our kitchen. Anyway, the potentialities of the boiler which is the object of this patent application are even more important. The increase of the temperature of 20°C is in fact just an example, which is newsworthy for a domestic use, meanwhile the increase of the temperature from the entrance (15) to the exit (13), may reach also 80°C.

Fig.5, as already said, shows the simplified functioning of the big type of boiler, in its maintenance period and underlines the easy and high increase of temperature with a minimum consumption.

Gas-oil goes out from the radiators at 60°C and enters the collector tube (25) with an amount if 120 liters to the minute, afterwards it enters the pressure pump (26) and goes up to the adjustable valve (27) with a pressure of BAR 2,5. The adjustable valve (27) separates the liquid in two parts. 15 liters a minute flow in to the spiral (8), rising till the exit (13) at a temperature of 140°C and a pressure of BAR 1; thus, we have a fall of pressure of BAR 1,5; the others 150 liters pass by the valve (27) and arrive straight at point (28) where the gas-oil flows after coming out from the spiral (8); we have a fall of pressure of 0.9 BAR, and here takes place the mixture between the two amounts, one with a temperature of 140°C, or at least a higher temperature, and the other at 60°C or, anyway, at a lower temperature.

The result is thus an homogeneous flux of 120 liters a minute at a temperature of 70°C, or anyway at an intermediate temperature. The choice to separate the two liquids has to do with the fact that gas-oil, unlike water, does not boil off at 100°C and so it is possible to heat up to height temperature also small amounts of liquid; the latter mixes then with the residual amount of liquid increasing in this way its temperature; so the result is that we obtain in a very short lapse of time the total amount of liquid at a higher temperature.

Fig.6, as we have already said, shows the front-overview of the invention as a whole including the allowed fitting and it points out the possibility to recover the heat loss of which we talked on the occasion of the description of Fig.3, setting up an exchanger of heat air-air.

The heat exchanger (29) has got the function to exchange the temperature between the air that goes out from the discharge point (32) at open air, with the air that enters the burner from the entrance (1); in the way that the air that enters the burner will be warm or hot instead of cold and above all free from moisture; all this favors a better functioning of the burner with a well-rendered energetic and economical saving. The boiler can of course works even without this exchanger; its role is in fact to improve furthermore the functioning of the boiler. The air filter (30) is useful for a longer last of the boiler and for a good functioning of the same because of it gives the internal protection against dust, pollen, leaves, etc., that sooner or later will block all the air ducts, stopping, consequently, the boiler's working.

### Best mode for carrying out the invention:

The air enters from a butterfly register valve (A) of external air, then it passes in a filter (30) whose function is to clean away dust, etc. Then it is aspired from a ventilator (31) and pushed towards an exchanger (29) of heat air-air and enters forcedly in the entrance system (1) and arrives at the deflection plate (14), where it is pushed towards the burner's plate (3), which is inserted in the combustion pipe (9). At this point a part of the air crosses the burner's plate passing through various series of small holes, i.e. (20), which vertically cross the whole burner's plate (3) and the residual air comes back, hits the topside of the deflection plate (14) and goes towards the internal part of the register pipe (4) which regulates the air flow through a threaded shaft (10); the gas that comes from the entrance pipe (2) is then aspired inside the above mentioned pipe. In the middle (5) of the register pipe (4), so, you have a mixture of air and gas, that goes upwards, then is separated in different passages, i.e. (22), of the burner's plate (3) thanks to a small inverted cone (19), and goes out from the topside (6) of the burner's plate (3), thanks to small holes, i.e. (21), which vertically cross only the part of the burner's plate (3), that is above the passage itself, i.e. (22). In this upper part (6) of the burner's plate (3), the mixture air-gas is burnt out through an electric ignition (33) that in the combustion area (17), creates a set of little flames.

Inside the combustion pipe (9) we have the concoction of air temperatures. The air goes upwards, it comes across the disc (18) that has a safety valve and an inspection glass (7) and it goes towards the flat spiral (8), passes by it and goes towards the non-return heat pipe (11) and then goes downwards till the level of the burner's plate (3); afterwards it crosses the flat spiral (8) for a second time and goes towards the combustion pipe (9). At this point the air keeps going downwards and it is compelled to make another crossing of the flat spiral towards the external pipe of the boiler (12) till it reaches the discharge pipe (32) Hot air crosses the flat spiral again and again, thus it gives all its heat energy to the spiral itself and consequently to the liquid that flows inside it; for this reason we have a heat increase of the spiral from its lower part to its upper part and, so, gas-oil that flows inside the spiral (8) enters (15) at a low temperature, but goes out (13) from the spiral at a very high temperature.

In this particular type of boiler, gas-oil temperature is 60°C when it enters (15) in the inferior part of the spiral (8) and is 140°C when it goes out (13) from the topside of the spiral; then there is a prompt fall of temperature when there is the concoction with the liquid that flows into the spiral itself. Gas-oil goes out from the radiators, i.e. (23), enters the collector pipe (25), goes towards the pressure pump (26) and then it rises till the adjustable valve (27) where gas-oil separates itself: a part of gas- oil goes towards the spiral (8) and goes upwards the exit (13) and the residual passes by the valve (27) and arrives straight to point (28) where it finds also the gas-oil that has flown into the spiral (8) ; here we have the mixture of the two amounts of liquid. The result is an homogeneous fixed-temperature liquid flow.

We have very high temperature, above 100°C, only in the last crossing of the flat spiral and anyway it is not at all dangerous. In fact, after a series of experiments, we realized that gas-oil even at 320°C remains liquid and it does not burn out nor explode. The gas-oil to blow and to become explosive, needs really high pressures As far as our gas-oil is concerned, we can say it enters the spiral at BAR 2,5 and goes out at BAR 1; so we have a fall of pressure of 1,5 BAR and we have the lowest pressure where we have the highest temperature.

Anyway, considering the highest pressure reached by the liquid, that is to say BAR 2,5, we can assert that it is not as high as the pressure applied in cars engines that i.e. allow the gas-oil to burn. Furthermore the gas oil flow into the piping in lock of air, so, it absolutely cannot burn.

It is also possible to supply the boiler with an "expansion vase" for those cases in which gas-oil increases or decreases its volume due to the heat variation. Anyway, these variations are inferior to the ones of water; as gas-oil does not condensate and has a really high boiling point we will never reach in this case in point.

Everything we have above described, with the help of the patterns, is just a non-limiting example.

Of course, it is object of this patent application also what is not directly described or shown, if it refers to the general purpose of the present invention.

## Claims

1. Gas-oil boiler with flat spirals, **characterized in that** it allows a recover of the heat loss, usually dispelled by the drain pipe of the burner of boilers, it prevents the development of both the condensate and /or lime-stone, it allows an increase of the temperature in the heating system, without compromising its components nor its safety limits, it has also a better output and reduced consumptions, at last, but not least, it favors an economical saving, thanks to the following elements: ► a butterfly register valve (A) from which open air can easily enter; ► a filter (30) from which open air passes through and that protect the inside from dust, pollen, leaves, etc., that may overload all the passages of the air, consequently blocking the boiler working; ► a ventilator (31) that aspires such air; ► an exchanger (29) heat air-air, whose purpose is to exchange the temperatures between the air that goes out from the drain pipe (32) to the open air, with the air that enters (1) the boiler's burner; **in that** way that the air that enters the burner is warm or hot and without moisture, instead of cold; all this of course favors a better working of the burner with a consequent energetic and economic saving; ► an entrance pipe for open air (1); ► a deflection plate (14) that pushes air towards the burner's plate (3) and it deviates the air that comes back from the plate towards the inside of the register pipe (4) of the air flow; ► a burner's plate (3) which is composed by an aluminum cylinder on which there are two alternate series of holes: § holes, i.e. (20), of suitable dimension, from which only air can pass through and that cross the plate (3) vertically, § holes, i.e. (21), of suitable dimension, usually smaller than the previous ones, from which passes the mixture air-gas, that enters inside the plate (3) from the intermediate part (5) of the register pipe (4) of air flow, thanks to a small inverted cone (19) and it passes through it radial way passing through the passages, i.e. (22), to arrive to the holes, i.e. (21), we are talking about.
This mixture is then burned out in the upper part (6) of the burner thanks to an electrical ignition (33) that in the combustion area (17) creates a series of small flames, ► an electric ignition (33), ► a register pipe (4) that is changeable thanks to a threaded shaft (10), where gas is sucked from the gas entrance pipe (2); ► an entrance pipe for gas (2); ► a combustion pipe (9) made of a material suitable to easily become white-hot, where takes place the mixing of air temperatures; ► a disc (18) made of a material suitable to become white-hot; ► a safety valve and an inspection glass (7) put on the disc (18); ► a flat spiral (8) made of copper from which gas-oil can pass and where the welds among the pipes have been made by a particular alloy called copper-copper Hot air crosses many times the flat spiral and it gives all its thermic energy to the spiral itself and consequently to the liquid that flows inside it; for this reason we have an increase of the temperature of the spiral from its lower part to its upper one, so that the gas-oil that flows inside the flat spiral (8) enters (15) into the spiral at low temperature and comes out (13) from it at high temperature. The crossing are also possible thanks to the existence of crowns, i.e. (16) which are well welded to the pipes; ► a non-return heat pipe (11); ► a pipe which is external to the boiler (12); ► a drain pipe (32); ► gas-oil as a liquid which flows in the heating system; ► at least a radiator (23); ► a collector pipe (25), that brings gas-oil from the radiator to the pressure pump (26); ► a pressure pump (26) from which gas-oil flows and goes up to the adjustable valve (27); ► a adjustable valve (27) that separates gas-oil so that a part of it goes towards the spiral (8) piping to rise up to the exit (13); and the other part, once it has passed by the aforesaid valve (27) it gets straight to the point (28) where gas-oil pours after coming from the spiral (8) and where the mixture of the two amounts takes place; so the result is an homogeneous liquid flow with a fixed temperature; ► an expansion vase which is useful when gas-oil increases or decreases its heat variations.

2. Gas-oil boiler with flat spirals, as claimed in claim 1), **characterized in that** instead of gas oil it is used another derivative of petroleum, provided that it is suitable for our purpose.

3. Gas-oil boiler with flat spirals as claimed in claim 1) or 2), **characterized in that** it can be made by any material, even different for each of its components, provided that it is suitable for our purpose.

4. Gas-oil boiler with flat spirals as claimed in claim 1), 2) or 3), **characterized in that** the single components can be made in any shape, number and dimension even different from those we have here described or represented, provided that the aim of the invention is respected.

5. Gas-oil boiler with flat spirals, created according to one of the above mentioned claims.
